(19) Europäisches Patentamt European Patent Office Office européen des brevets

(11) **EP 3 250 952 B1**

(12) **EUROPEAN PATENT SPECIFICATION**

(45) Date of publication and mention of the grant of the patent:
**08.05.2019 Bulletin 2019/19**

(51) Int Cl.:
*G02B 6/12* (2006.01)　　　*H04B 10/29* (2013.01)
*H04J 14/02* (2006.01)　　　*H04B 10/548* (2013.01)
*H04L 27/26* (2006.01)

(21) Application number: **15879778.7**

(22) Date of filing: **27.01.2015**

(86) International application number:
**PCT/IB2015/050606**

(87) International publication number:
**WO 2016/120661 (04.08.2016 Gazette 2016/31)**

(54) **FULL-OPTICAL MULTIWAVELET ORTHOGONAL FREQUENCY DIVISIONAL MULTIPLEXING (OFDM) AND DEMULTIPLEXING**

VOLLOPTISCHES ORTHOGONALES FREQUENZMULTIPLEXING (OFDM) UND -DEMULTIPLEXING DURCH MULTIWAVELETS

MULTIPLEXAGE ET DÉMULTIPLEXAGE PAR RÉPARTITION ORTHOGONALE DE LA FRÉQUENCE (OFDM), ENTIÈREMENT OPTIQUES, PAR ONDELETTES MULTIPLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.12.2017 Bulletin 2017/49**

(73) Proprietor: **Mer-Cello Wireless Solutions Ltd.**
**4934827 Petach-Tikva (IL)**

(72) Inventors:
• **BEN-EZRA, Yossef**
**Holon (IL)**
• **BEN HAIM, Yaniv**
**7685400 Kfar-mordechai (IL)**

(74) Representative: **Richter, Allen**
**Patentanwalt Dr. Kasche**
**Resirain 1**
**8125 Zollikerberg/Zürich (CH)**

(56) References cited:
CN-A- 104 301 063　　　US-A1- 2004 120 564
US-A1- 2012 045 160

• **GABRIELLA CINCOTTI ET AL: "Optical Wavelet Signals Processing and Multiplexing", EURASIP JOURNAL ON APPLIED SIGNAL PROCESSING, vol. 10, 1 January 2005 (2005-01-01), pages 1574-1583, XP055499667,**
• **BEN-EZRA Y ET AL: "1 Tbps transmission system based on hierarchical approach to Wavelet Packet Transform OFDM", TRANSPARENT OPTICAL NETWORKS (ICTON), 2011 13TH INTERNATIONAL CONFERENCE ON, IEEE, 26 June 2011 (2011-06-26), pages 1-4, XP031911749, DOI: 10.1109/ICTON.2011.5970864 ISBN: 978-1-4577-0881-7**
• **BULAKCI O ET AL: "Wavelet transform based optical OFDM", OPTICAL FIBER COMMUNICATION - INCUDES POST DEADLINE PAPERS, 2009. OFC 2009. CONFERENCE ON, IEEE, PISCATAWAY, NJ, USA, 22 March 2009 (2009-03-22), pages 1-3, XP031467971, ISBN: 978-1-4244-2606-5**
• **DAWOOD SAMEER A ET AL: "Comparison the performance of OFDM system based on multiwavelet transform with different modulation schemes", 2014 INTERNATIONAL CONFERENCE ON COMPUTER, COMMUNICATIONS, AND CONTROL TECHNOLOGY (I4CT), IEEE, 2 September 2014 (2014-09-02), pages 403-406, XP032741885, DOI: 10.1109/I4CT.2014.6914214 [retrieved on 2014-09-30]**

EP 3 250 952 B1

**(Cont. next page)**

• BULAKEI, O ET AL.: 'Wavelet Transform Based Optical OFDM' CONFERENCE ON OPTICAL FIBER COMMUNICATION 26 March 2009, pages 1 - 3, XP031467971

**Description**

FIELD

Embodiments of various systems disclosed herein relate in general to Optical Frequency Division Multiplexing (OFDM) and, more particularly, to optical OFDM.

BACKGROUND

Optical Frequency Division Multiplexing (OFDM) is known as a modulation technique that allows efficient multiplexing, i.e., combining of analogue or digital signals, transmitting the combined signals over a shared medium, and respective assigning of the combined signals to a multiplicity of users. Fast Fourier Transformation (FFT) are tools used ubiquitously in signal processing and signal analysis applications, including in OFDM. In recent years, Discrete Wavelet Transform (DFT) is being increasingly used to replace FFT in implementing OFDM, as the use of wavelet-based transforms overcomes some of the disadvantages associated with FFT-based OFDM, for example the creation of side lobes due to the use of rectangular windows.

Known multiwavelet-transform (MWT) or multiwavelet-based OFDM (MWT-OFDM) techniques are implemented by employing full-electronic or electro-optical techniques, both of which however require electronic signal processing. As known in the art, optical signal processing is much faster than electronic signal processing. Hence, the electronic processing in for example electro-optical techniques is sometimes referred to as "the electronic bottleneck". Full-optical realizations of wavelet transform are limited to the use of scalar wavelet transforms.

There is therefore a need for, and it would be advantageous to have an architecture that enables multiwavelet-based OFDM and, correspondingly, multiwavelet-based demultiplexing techniques that are implemented fully optically.

D1: Cincotti, et al. disclose in "Optical wavelet signals processing and multiplexing". EURASIP Journal on Applied Signal Processing, Volume 2005, 1 January 2005, Pages 1574-1583: We present compact integrable architectures to perform the discrete wavelet transform (DWT) and the wavelet packet (WP) decomposition of an optical digital signal, and we show that the combined use of planar lightwave circuits (PLC) technology and multiresolution analysis (MRA) can add flexibility to current multiple access optical networks. We furnish the design guidelines to synthesize wavelet filters as two-port lattice-form planar devices, and we give some examples of optical signal denoising and compression/decompression techniques in the wavelet domain. Finally, we present a fully optical wavelet packet division multiplexing (WPDM) scheme where data signals are waveform-coded onto wavelet atom functions for transmission, and numerically evaluate its performances.

D2: Ben Ezra et al. disclose in "1 TBPS transmission system based on hierarchical approach to Wavelet Packet Transform OFDM", TRANSPARENT OPTICAL NETWORKS (ICTON), 2011 13TH, INTERNATIONAL CONFERENCE ON, IEEE, 26 June 2011, (2011-06-26), pages 1-4, XP031911749, DOI:10.1109/ICTON.2011.5970864, ISBN: 978-1 -4577-0881: Orthogonal frequency-division multiplexing (OFDM) is a promising modulation technique well known in wireless and wired communication. Conventional OFDM implementation utilizes Fourier transform in order to generate orthogonal subcarriers. We proposed the novel hierarchal architecture for 1 Tbps transmission of the optical signal based on dual polarization transmission based on the Discrete Wavelet Packet Transform (DWPT) and Inverse Discrete Wavelet Packet Transform (IDWPT). The novel system of Wavelet Packet Transform (WPT) OFDM permits to avoid CP. to increase significantly the transmission distance and to improve the system spectral efficiency (SE) as compared to the conventional coherent optical OFDM (CO-OFDM).

D3: Bulakci O et al. disclose in "Wavelet transform based optical OFDM", OPTICAL FIBER COMMUNICATION - INCUDES [sic!] POST DEADLINE PAPERS, 2009. OFC 2009. CONFERENCE ON, IEEE, PISCATAWAY. NJ, USA, 22 March 2009 (2009-03-22), pages 1-3, XP031467971, ISBN: 978-1-4244-2606-5: Wavelet transform based OFDM is proposed to increase the dispersion tolerance of optical OFDM. For moderate accumulated dispersion the performance is shown to be comparable with Fourier transform based optical OFDM with 10% cyclic prefix.

The description above is presented as a general overview of related art in this field and should not be construed as an admission that any of the information it contains constitutes prior art against the present patent application.

SUMMARY

Aspects of embodiments relate to a device, system and method for full-optical OFDM.

According to some embodiments, an optical multiwavelet transform (MWT) medium or an inverse multiwavelet transform (IMWT) medium for implementing optical wavelet transform (WT) Orthogonal Frequency Division Multiplexing (OFDM) or optical demultiplexing, respectively, comprises a plurality of N waveguides for receiving in parallel N corresponding modulated optical input signals $\lambda_{1,MOD}$ to $\lambda_{N,MOD}$. Each waveguide includes at least two optical resonators configured such as to realize a wavelet filterbank that effects a wavelet transformation or inverse wavelet transformation (IWT) on the modulated optical signals to obtain optical WT or IWT signals that can be orthogonally frequency division multiplexed or demultiplexed, respectively.

According to some embodiments, an optical resonator of the at least two optical resonators includes a microring resonator.

According to some embodiments, an optical resonator of the at least two optical resonators includes a Mach-Zehnder interferometer.

According to some embodiments an optical resonator of the at least two optical resonators includes a plurality of microring resonators in cascade arrangement.

According to some embodiments, the wavelet filterbank is a Geronimo, Hardian and Massopust (GHM) wavelet filterbank.

According to some embodiments, an optical wavelet multiplexer comprises a multiplexer input module comprising a plurality of N modulators for modulating N optical input signals to obtain a plurality of N modulated optical input signals $\lambda_{1,MOD}$ - $\lambda_{N,MOD}$, and the optical MWT medium for receiving the N modulated optical input signals $\lambda_{1,MOD}$ - $\lambda_{N,MOD}$.

According to some embodiments the multiplexer input module includes a light source.

According to some embodiments, the multiplexer input module includes a splitter for splitting optical signals emitted by the light source.

According to some embodiments, the optical wavelet multiplexer includes a multiplexer feedback module configured to cause adjustment of physical parameters of one or more of the at least two optical multiplexer resonators based on detected signal parameters at an output signal line.

According to some embodiments, an optical wavelet demultiplexer comprises an optical IMWT medium that includes a plurality of N waveguides for receiving in parallel corresponding N modulated optical WT input signals $\lambda_{1,MOD, WT}$ to $\lambda_{N,MOD,WT}$ of an optical OFDM signal. Each waveguide includes at least two optical resonators configured such to realize a wavelet filterbank that effects inverse wavelet transformation (IWT) on the modulated optical wavelet transformed signals to obtain optical IWT signals $\lambda_{1,MOD,IWT}$ to $\lambda_{N,MOD,IWT}$ that can be demultiplexed.

According to some embodiments, the optical wavelet demultiplexer comprises a demultiplexer input module for providing the optical IMWT medium with the plurality of N modulated and wavelet transformed optical signals $\lambda_{1,MOD, WT}$ to $\lambda_{N,MOD, WT}$ of a multiplexed signal $I_{mux}$.

According to some embodiments, the optical wavelet demultiplexer comprises a demultiplexer output module for providing demultiplexed signals $I_{1,demux}$ to $I_{N,demux}$ over output signal lines. According to some embodiments, the optical wavelet demultiplexer includes a demultiplexer feedback module that is operatively coupled with one or more of the at least two optical demultiplexer resonators and with the output signal lines and/or with each output of the demultiplexer waveguides.

According to some embodiments, the demultiplexer output module further comprises N optical filters for obtaining optical inverse wavelet transformed signals $\lambda_{c0,1,MOD, IWT}$ to $\lambda_{cQ,N,MOD,IWT}$ respective of their carrier wavelengths $c_0$ to $c_Q$.

According to some embodiments, a system comprises an optical wavelet multiplexer as above for multiplexing source signals $I_{1,source}$ to $I_{N,source}$ and an optical wavelet demultiplexer as above, the optical wavelet demultiplexer communicably coupled with the optical wavelet multiplexer for recreating the sources signals $L_{1,source}$ to $I_{N,source}$.

According to some embodiments, the optical multiplexer resonators are employed to implement optical demultiplexer resonators with respective different inputs and outputs for multiplexed and demultiplexed optical signals.

According to some embodiments, a method for optical multiwavelet OFDM or optical multiwavelet demultiplexing of a plurality of optical signals comprises receiving a plurality of N modulated optical signals $\lambda_{1,MOD}$ to $\lambda_{n,MOD}$ at a respective plurality of N waveguides of an optical MWT or IMWT medium, each waveguide comprising at least two optical resonators. The method further comprises transmitting the plurality of N signals through the N waveguides for generating a plurality of wavelet transformed or inverse wavelet transformed optical signals $\lambda_{1,MOD,WT/IWT}$ to $\lambda_{N,MOD,WT/IWT}$ according to coupling coefficients of the at least two optical resonators

This summary is provided to introduce a selection of concepts in a simplified form that are further described below in the detailed description. This summary is not intended to identify key features or essential features of the claimed subject matter, nor is it intended to be used to limit the scope of the claimed subject matter.

BRIEF DESCRIPTION OF THE DRAWINGS

Embodiments disclosed herein are described, by way of example only, with reference to the following accompanying drawings, wherein:

**FIG. 1** is a schematic general block-diagram illustration of an optical multiwavelet OFDM multiplexer, according to an embodiment;

**FIG. 2** is a schematic block-diagram illustration of an optical multiwavelet OFDM multiplexer, according to an embodiment;

**FIG. 3** is a schematic block-diagram illustration of an optical multiwavelet OFDM multiplexer, according to another embodiment;

**FIG. 4** is a schematic general block-diagram illustration of an optical multiwavelet OFDM demultiplexer, according to an embodiment;

**FIG. 5** is a schematic block-diagram illustration of an optical multiwavelet OFDM demultiplexer of wavelet-based OFDM signals, according to an embodiment;

**FIG. 6** is a schematic block-diagram illustration of an optical multiwavelet OFDM demultiplexer, according to another embodiment;

**FIG. 7** is a schematic block-diagram illustration of an optical multiwavelet multiplexer and demultiplexer system, according to an embodiment; and

**FIG. 8** is a flow-chart illustration of a method for implementing optical multiwavelet-based demultiplexing of multiwavelet-based OFDM signals.

DETAILED DESCRIPTION

Aspects of embodiments relate to a system, device and method that allow optical multiwavelet OFDM and, analogously, optical demultiplexing of multiwavelet OFDM signals. The multiplexing and/or demultiplexing may in some embodiments be performed fully optically, i.e., free of optical-to-electrical signal conversion or vice versa.

According to some embodiments, an optical wavelet or multiwavelet Optical Frequency Division (OFD) multiplexer and OFD demultiplexer comprises an optical optical wavelet transform (WT) medium that includes a plurality of waveguides. Each of the plurality of waveguides includes at least two optical (multiplexer and/or demultiplexer) resonators for the concurrent transmission and wavelet-based filtering of a respective plurality of $n$ modulated optical signals $\lambda_{n,MOD}$, where $n \geq 1$.

It should be noted that exemplarily in some embodiments, each of the plurality of optical signals $\lambda_{2,MOD}$-$\lambda_{n,MOD}$ may undergo different modulation, while in some other embodiments two or more carrier signals may undergo identical modulation.

As outlined hereinbelow in more detail, the optical resonators of the plurality of waveguides are configured such as to obtain coupling coefficients to effect multiwavelet multiplexing or demultiplexing with respect to the plurality of modulated optical signals. More specifically, coupling coefficients obtained by the optical microring resonators may correspond to coefficients of a multiwavelet (MW) matrix filterbank such as, for example, the filterbank proposed by Geronimo, Hardian and Massopust, also known as "GHM filter matrix" or "GHM filterbank". In a multiwavelet setting exemplified herein, multiscaling and multiwavelet function coefficients may be 2x2 matrices which, during a transformation step, multiply vectors instead of scalars. This means that the filterbank needs two input rows.

The plurality of modulated optical signals may for example originate from an unmodulated optical carrier wave that is split by a splitter of the system into N unmodulated optical carrier waves. The N unmodulated optical carrier waves may then each be modulated by an external modulator to obtain the modulated optical signals.

It is noted that while embodiments disclosed herein refer in general to optical signals only, this should by no means to be construed as limiting as, in some embodiments, electronic signal processing may also be involved. For example, an electronic signal representing a carrier wave may be split electronically into a plurality of electronic signals representing respective carrier waves, which may then be converted into a plurality of optical carrier waves.

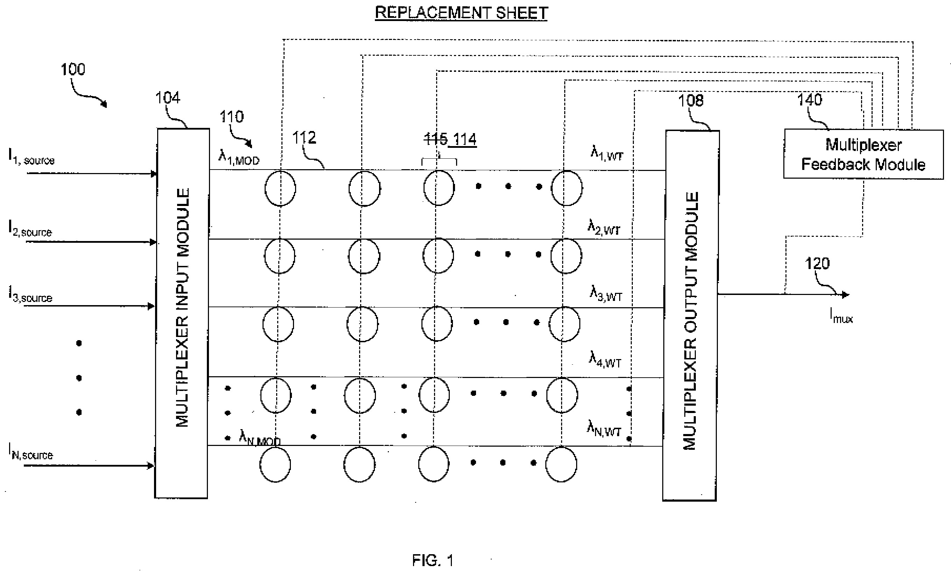

Referring to **FIG. 1,** aspects of embodiments relate to an optical wavelet multiplexer **100.** Optical wavelet multiplexer **100** includes an optical MWT multiplexer medium **110** and may further include a multiplexer input module **104** and a multiplexer output module **108.** Optical MWT multiplexer medium **110** includes a plurality of multiplexer waveguides **112** that are communicatively coupled in parallel with multiplexer output module **108.** The number of multiplexer waveguides **112** may correspond to the number of input signals $I_{1,source}$ to $I_{n, source}$.

Multiplexer waveguides **112** include at least two optical multiplexer resonators **114** configured to realize a MW filterbank for optical multiwavelet OFDM such that modulated optical signals $\lambda_{1,MOD}$ to $\lambda_{n,MOD}$ received from multiplexer input module **104** by optical MWT multiplexer medium **110** are wavelet-processed over the optical MWT multiplexer medium **110** by the plurality of multiplexer waveguides **112.** The plurality of wavelet-processed optical signals is then multiplexed by multiplexer output module **108** to obtain a multiplexed output signal $I_{mux}$. As outlined hereinbelow in greater detail, $I_{mux}$ can be an electrical signal or an optical signal representative of wavelet processed optical signals.

The MW filterbank is realized by the plurality of multiplexer waveguides **112** and optical multiplexer resonators **114.** Examples disclosed herein relate to the realization of a GHM filterbank. However, this should by no means to be construed as limiting. Accordingly, optical MWT multiplexer medium **110** may be configured to implement other MW filterbanks such that optical wavelet multiplexer **100** enables optical multiwavelet-transform and orthogonal multiplexing of modulated optical signals $\lambda_{1,MOD}$ to $\lambda_{n,MOD}$.

The number of optical multiplexer resonators **114** may be $n^2$, where n is the number of optical input signals. The MW filterbank may for example be expressed by the following mathematical equation:

$$W = \begin{bmatrix} H_0 & H_1 & H_2 & H_3 & 0 & 0 & \cdots & 0 & 0 & 0 & 0 \\ 0 & 0 & H_0 & H_1 & H_2 & H_3 & \cdots & 0 & 0 & 0 & 0 \\ \vdots & \vdots & \vdots & \vdots & \vdots & \vdots & & \vdots & \vdots & \vdots & \vdots \\ H_2 & H_3 & 0 & 0 & 0 & 0 & \cdots & 0 & 0 & H_0 & H_1 \\ G_0 & G_1 & G_2 & G_3 & 0 & 0 & \cdots & 0 & 0 & 0 & 0 \\ 0 & 0 & G_0 & G_1 & G_2 & G_3 & \cdots & 0 & 0 & 0 & 0 \\ \vdots & \vdots & \vdots & \vdots & \vdots & \vdots & & \vdots & \vdots & \vdots & \vdots \\ 0 & 0 & 0 & 0 & 0 & 0 & \cdots & G_0 & G_1 & G_2 & G_3 \\ G_2 & G_3 & 0 & 0 & 0 & 0 & \cdots & 0 & 0 & G_0 & G_1 \end{bmatrix} \quad (1)$$

where $H_0$, $H_1$, $H_2$ and $H_3$ are high-pass filter matrices and $G_0$, $G_1$, $G_2$ and $G_3$ are low-pass filter matrices. In general, matrices $H_0$ and $G_0$ may be referred to as "taps" that are KxK matrices. Merely to simplify the discussion that follows, K may equal 2, i.e., the taps are implemented by 2x2 matrices. Accordingly, an incoming data stream carried by modulated optical signals may undergo serial-to-parallel conversion.

The matrix elements of $H_0$, $H_1$, $H_2$ and $H_3$ may for example take the following values:

$$H_0 = \begin{bmatrix} \frac{3}{5\sqrt{2}} & \frac{4}{5} \\ \frac{1}{20} & \frac{3}{10\sqrt{2}} \end{bmatrix}; H_1 = \begin{bmatrix} \frac{3}{5\sqrt{2}} & 0 \\ \frac{9}{20} & \frac{1}{\sqrt{2}} \end{bmatrix}; H_2 = \begin{bmatrix} 0 & 0 \\ \frac{9}{20} & \frac{3}{10\sqrt{2}} \end{bmatrix}; H_3 = \begin{bmatrix} 0 & 0 \\ \frac{1}{20} & 0 \end{bmatrix} \quad (2)$$

The matrix elements of $G_0$, $G_1$, $G_2$ and $G_3$ may for example take the following values:

$$G_0 = \begin{bmatrix} \frac{1}{\sqrt{20}} & \frac{3}{\sqrt{20}} \\ \frac{1}{10\sqrt{2}} & \frac{3}{10} \end{bmatrix}; G_1 = \begin{bmatrix} \frac{9}{20} & \frac{1}{\sqrt{2}} \\ \frac{9}{10\sqrt{2}} & 0 \end{bmatrix}; G_2 = \begin{bmatrix} \frac{9}{20} & \frac{10}{10\sqrt{3}} \\ \frac{9}{10\sqrt{2}} & \frac{3}{10} \end{bmatrix}; G_3 = \begin{bmatrix} \frac{1}{10} & 0 \\ \frac{1}{10\sqrt{2}} & 0 \end{bmatrix}. \quad (3)$$

Since the number of input signals n equals 2K, a 2K x 2K transformation matrix is obtained by substituting the MW matrix filterbank with coefficients values. Each row of the filterbank represents therefore a combination of filters and operates on a respective data stream or, as exemplified herein, modulated optical signal, wherein the matrix filter coefficients of H and G each satisfy an orthogonality condition.

While in the accompanying figures an optical multiplexer resonator **114** is schematically illustrated by a single microring component, this should by no means to be construed as limiting. Correspondingly, one or more optical multiplexer resonators **114** of optical MWT multiplexer medium **110** may for example include a plurality of ring resonators, e.g., in a cascade arrangement (not shown), and/or a Mach-Zehnder interferometer and/or any optical component or components, which may be passive optical components. Realizing an optical multiplexer resonator **114** for example with a plurality of cascaded microrings may facilitate, in comparison to the controlling of the coupling coefficients where only one microring **114** is employed per coefficient, the controlling and/or adjusting of the coupling coefficients according to the system's operating parameters and, therefore, of the coefficients of matrices $H_0$ to $H_3$ and $G_0$ to $G_3$.

The coupling coefficients for the high and low-filter matrix elements H and G may depend on various parameters like, *inter alia,* the data rate carried by the received optical input signals. A higher data rate may require a smaller radius of microring **114** to retain for example the values of the coefficients in equations **(2)** and **(3)**. In other words, in order for the orthogonality conditions to be met to enable optical multiwavelet-based OFDM, the parameters of optical multiplexer resonators **114** may be adjustable based on the system's operating parameters (e.g., the data rate). Correspondingly, multiplexer **100** may include, according to some embodiments, a feedback module **140** operatively coupled with one or more or each of optical multiplexer resonators **114** and with an output signal line **120** operative to carry $I_{mux}$ and/or with each output of multiplexer waveguides **112**.

Multiplexer feedback module **140** may be configured to cause adjustment of the physical parameters of optical multiplexer resonators **114** based on signal parameters detected at output signal line **120**. For example, responsive to an increase in the data rate, multiplexer feedback module **140** may cause adjustment (e.g., reduction) of a radius of one or more of the microrings **114**. Adjustment of parameters of multiplexer resonator **114** such as (for example) the radius of a microring can be achieved by local heating by heating element (not shown) (or cooling by cooler element (not shown)) and/or by illumination of resonator **114** by a radiation source (not shown), and/or by evaporation of refractive material onto or from resonator **114** by an evaporator (not shown).

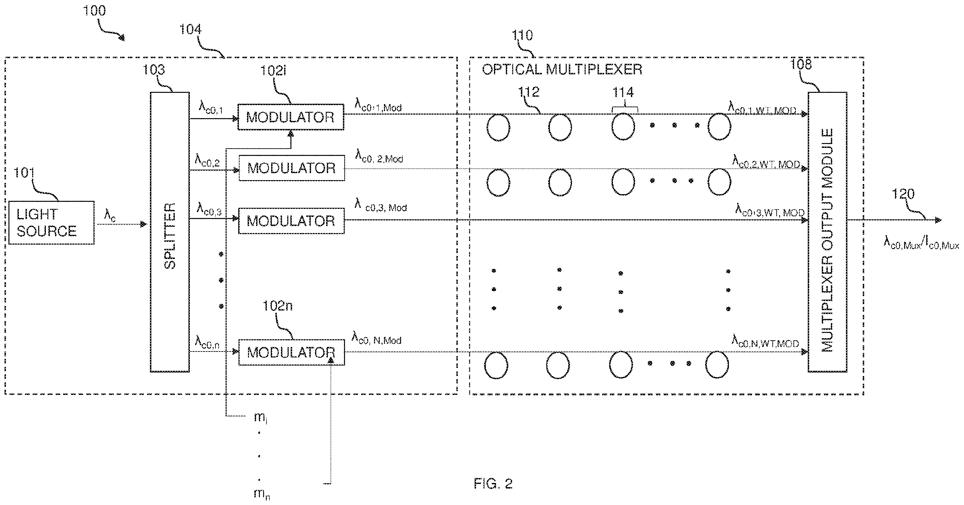

Referring now to **FIG. 2,** multiplexer input module **104** of optical wavelet multiplexer **100** may include a splitter **103** for splitting, for example, an optical signal which may qualify as a carrier wave having a wavelength $\lambda_{c0}$ emitted from a light source **101** (e.g., a laser light source) into a plurality of optical signals $\lambda_{c0,1}$ to $\lambda_{c0,n}$, where $c_0$ denotes the wavelength of the carrier wave. The plurality of optical signals $\lambda_{c0,1}$ to $\lambda_{c0,n}$ may then be modulated through a respective plurality of modulators **102i-102n** by modulating signals $m_i$ to $m_n$, where $i=1,2,...n,$ and $n$ denotes the number of received signals, to obtain modulated optical signals $\lambda_{c0,1,MOD}$ - $\lambda_{c0,n,MOD}$. Modulators **102** may in some embodiments also be referred to as "external modulators" **102** for being external to light source **101**. Otherwise stated, modulation may be performed after optical carrier waves or signals are emitted by light source **101**. In some embodiments, modulator **102** may be an electro-optical modulator. While embodiments disclosed herein refer to external modulators or modulation of optical signals, this should by no means to be construed as limiting. Accordingly, internal modulators (not shown) or modulation techniques may be additionally or alternatively be implemented for obtaining the modulated optical carriers.

Modulated optical signals having the same carrier wave $\lambda_{c0,1,MOD}$ to $\lambda_{c0,n,MOD}$ are subjected to multiwavelet transform and filtering by a MW matrix filterbank (e.g., GHM matrix filterbank) implemented by optical MWT multiplexer medium **110**. After the modulated optical signals are subjected to multiwavelet transform and filtering by optical MWT multiplexer medium **110,** the resulting wavelet-processed optical signals $\lambda_{c0,1,WT,MOD}$ to $\lambda_{c0,n,WT,MOD}$ are multiplexed or combined into a multiplexed optical output signal $\lambda_{c0,MUX}$. The multiplexing is performed by combining the wavelet-transformed optical signals by multiplexing output module **108** of optical wavelet multiplexer **100**. Alternatively, output module **108** may include a plurality of detectors (not shown) configured to detect the optical signals $\lambda_{c0,n,WT,MOD}$ to $\lambda_{c0,n,WT,MOD}$ emitted from multiplexer waveguides **112** and to convert the detected light into respective electrical signals, which may then be multiplexed into multiplexed signal $I_{c0,mux}$.

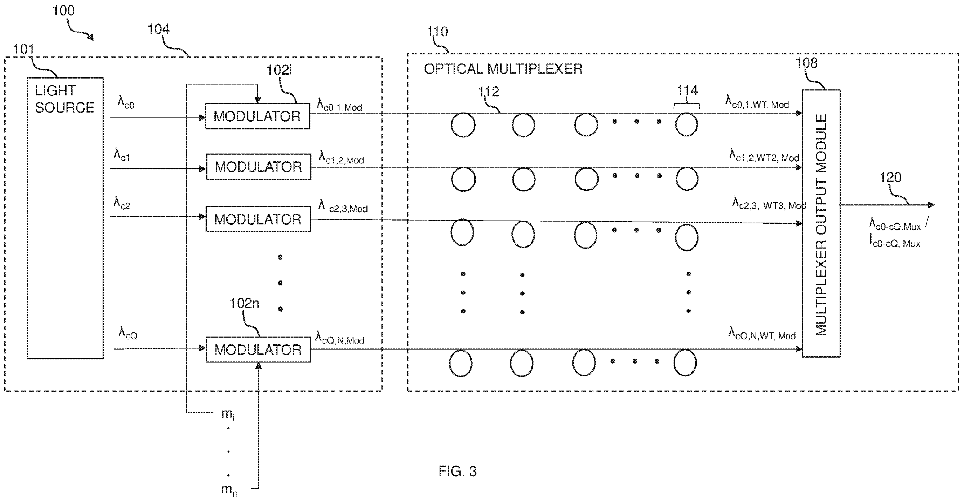

Reference is now made to **FIG. 3**. According to some embodiments, one or more light sources **101** may emit a plurality of optical signals that may qualify as carrier waves. At least two (e.g., a first and a second optical signal) of the plurality of optical signals may have a first and a second wavelength, respectively. Such optical signals are denoted herein as $\lambda_{c0}$ to $\lambda_{c0Q}$, where the different subscript $c_0$ to $c_Q$ denotes the optionally different wavelengths $Q=1,...,n.$

The plurality of optical signals $\lambda_{c0}$ to $\lambda_{cQ}$ may be modulated through modulators **102i** to **102n** where $i=1,2,...,n,$ by modulating signals $m_i$ to $m_n$, where $n$ denotes the number of received signals, to obtain modulated optical signals $\lambda_{c0,1,\,Mod}$ to $\lambda_{cQ,n,\,Mod}$. The modulated optical signals having at least two different wavelengths are then subjected to multiwavelet transformation according to the MW matrix filterbank implemented by optical wavelet multiplexer **100** for obtaining multiwavelet transformed optical signals $\lambda_{c0,1,WT,MOD}$ to $\lambda_{cQ,n,WT,MOD}$. Obtained signals $\lambda_{c0,1,WT,MOD}$ to $\lambda_{cQ,n,WT,MOD}$ are then multiplexed or combined into a multiplexed output signal $\lambda_{c0-cQ,mux}$. The multiplexing is performed by combining the wavelet-processed optical signals $\lambda_{c0,1,WT,MOD}$ to $\lambda_{cQ,n,WT,MOD}$ in multiplexer output module **108** of optical wavelet multiplexer **100.**

According to some embodiments, multiplexer output module **108** may include an output coupler that is communicatively coupled with an optical fiber (not shown). Alternatively, multiplexer output module **108** may include a plurality of detectors (not shown) configured to detect light emitted from multiplexer waveguides **112** and to generate electrical signals representative of the detected light. The electrical signals representative of the wavelet-processed optical signals may then be multiplexed by multiplexer output module **108** into a multiplexed signal $I_{mux}$ for further transmission and/or processing.

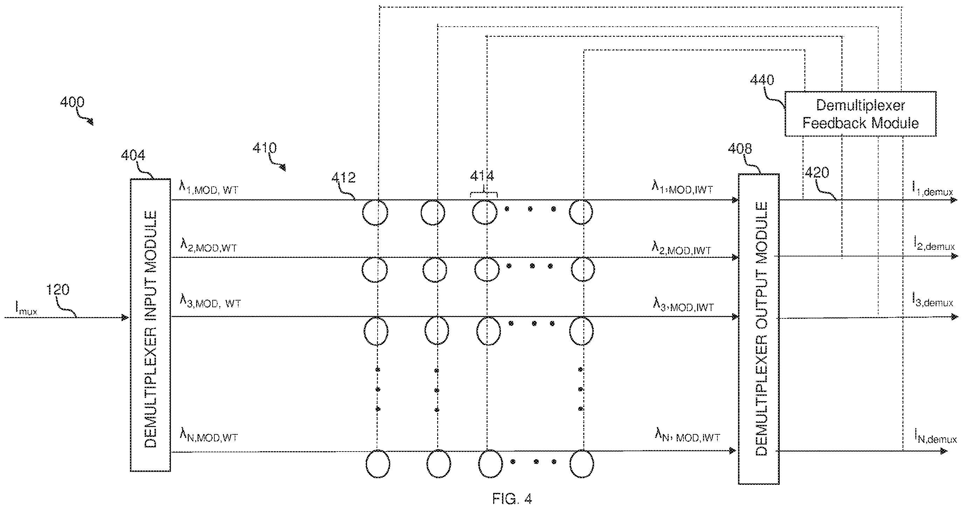

Reference is now made to **FIG. 4.** Aspects of embodiments relate to an optical multiwavelet demultiplexer **400** that is configured, for example, to demultiplex signals that were multiplexed by an optical wavelet multiplexer disclosed **100** herein. Optical wavelet demultiplexer **400** includes an optical MWT demultiplexer or reconstruction medium **410** and may further include a demultiplexer input module **404** for providing optical MWT demultiplexer medium **410,** in parallel, with a plurality of separated wavelet-transformed signals $\lambda_{1,WT}$- $\lambda_{n,WT}$ respectively associated with multiplexed source signals $I_{1,source}$-$I_{n,source}$, which may be electrical or optical signals. Demultiplexer input module **404** may, for example, include a splitter. Optical MWT demultiplexer medium **410** comprises a plurality of demultiplexer waveguides **412** that are communicatively coupled in parallel with demux input module **404**. The number of demultiplexer waveguides **412** corresponds to the number of input signals. For example, a pair of demultiplexer waveguides **412** may be configured to wavelet-process an input signal. More specifically, and in inverse analogy to optical wavelet multiplexer **100** described herein, incoming wavelet-transformed signals $\lambda_{1,WT}$- $\lambda_{n,WT}$ may undergo (as opposed to the multiplexing disclosed hereinabove) parallel-to-serial conversion and inverse wavelet-transformation by optical demultiplexer resonators **414** to obtain inverse wavelet-transformed signals $\lambda_{1,IWT}$- $\lambda_{n,IWT}$ according to an IMW matrix filterbank implementation. The IMW matrix filterbank may be implemented by a GHM matrix filterbank. Correspondingly, the number of optical demultiplexer resonators **414** of optical MWT demultiplexer medium **410** may be n$^2$, where n is the number of sets of parallel optical wavelet-processed input signals. Again, merely to simplify the discussion that follows, K may equal 2, i.e., the individual filters of the MW matrix filterbank are implemented by 2x2 matrices. In analogy to what is described herein with optical multiplexer resonators **114**, optical demultiplexer resonators **414** of optical MWT demultiplexer medium **410** may for example include a plurality of microring resonators **414** in a cascade arrangement (not shown) and/or a Mach-Zehnder interferometer and/or any optical component or components, which may be passive optical components

As exemplified hereinbelow in greater detail, the inverse wavelet-transformed signals $\lambda_{1,IWT}$- $\lambda_{n,IWT}$ may in some embodiments be further processed by a demultiplexer output module **408**. Demultiplexer output module **408** may be configured to demodulate inverse wavelet-transformed signals $\lambda_{1,IWT}$- $\lambda_{n,IWT}$, to convert inverse wavelet-transformed and optical signals $\lambda_{1,IWT,demux}$-$\lambda_{n,IWT,demux}$ into electrical signals and/or configured to filter out one or more carrier wavelengths $\lambda_{c0}$- $\lambda_{cQ}$.

Correspondingly, demultiplexer output module **408** may include demodulators (not shown) for recreating source signals or demultiplexed signals $I_{1,source}$-$I_{n,\,source}$. It should be noted that in some embodiments, the demodulators (not shown) may be configured to demodulate the modulated and inverse wavelet-transformed optical signals $\lambda_{1,IWT}$ - $\lambda_{n,IWT}$. In alternative embodiments, the demodulators (not shown) may be configured to demodulate electrical signals representative of the modulated and inverse wavelet-transformed optical signals $\lambda_{1,IWT}$ - $\lambda_{n,IWT}$.

A demultiplexer feedback module **440** may be operatively coupled with one or more or each one of optical demultiplexer resonators **414** and output signal lines **420** operative to carry $I_{1,demux}$ - $I_{N,demux}$, and/or with each output of demultiplexer waveguides **412**. Demultiplexer feedback module **440** may for example be configured to cause adjustment of the physical parameters of optical demultiplexer resonators **414** based on the detected signal parameters at demultiplexer output signal lines **420**.

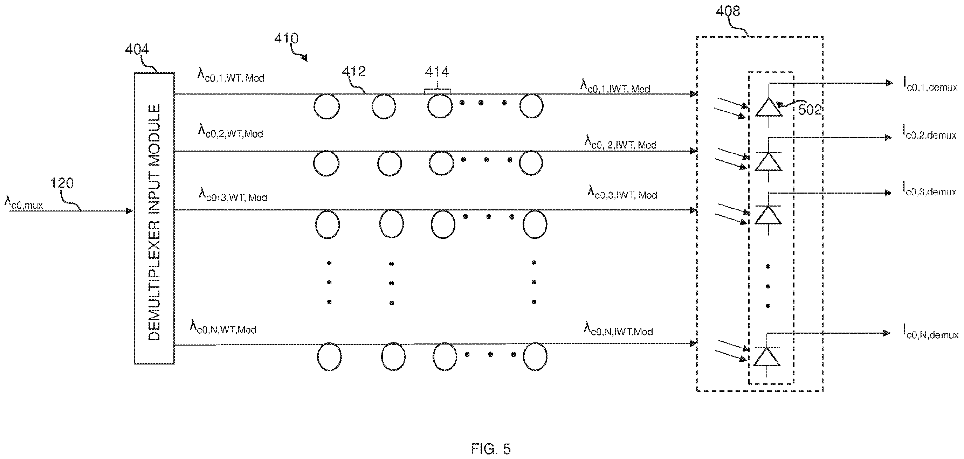

Further reference is made to **FIG. 5.** Demultiplexed optical signals $\lambda_{c0,1,IWT,\,Mod}$ to $\lambda_{c0,n,IWT,\,Mod}$ having a substantially single carrier frequency $c_0$ may in some embodiments be converted into electrical signals $I_{c0,1,demux}$-$I_{c0,n,demux}$, by optical-to-electrical converters **502** of demultiplexer output module **408.**

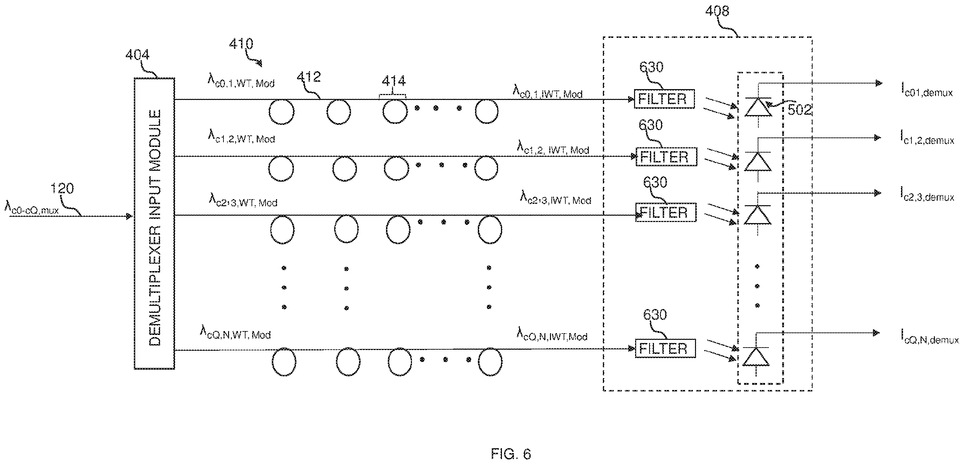

Referring now to **FIG. 6,** inverse wavelet-transformed optical signals may in some implementations have at least two different carrier wavelengths. Such optical signals are herein denoted as $\lambda_{c0,1,\,IWT,\,Mod}$ - $\lambda_{cQ,n,IWT,Mod}$, where subscript $c_0$-$c_Q$ denotes different carrier wavelengths of the optical signals. In this case, the carrier wavelengths respective of the input signals $\lambda_{c0,\,WT1,\,Mod}$ - $\lambda_{cQ,\,WTn,Mod}$ may be filtered out by optical filters **630** of demultiplexer output module **408**. The filtered inverse wavelet-transformed optical signals may then be further processed to recreate the source signals $I_{c0,1,demux}$ - $I_{cQ,n,demux}$ Such further processing may include, for example, demodulation and optical-to-electrical conversion.

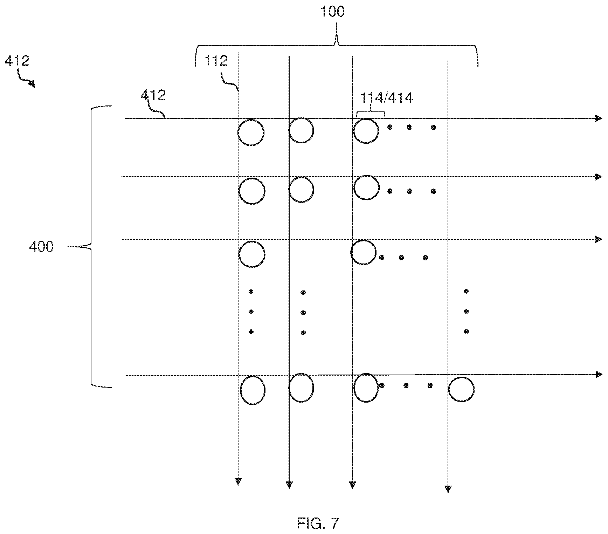

Further reference is now made to **FIG. 7.** According to embodiments, a system **700** includes optical wavelet multiplexer **100** coupled with optical multiwavelet demultiplexer **400** to transmit, via a network (not shown), signals encoding data representative of information from optical wavelet multiplexer **100** to optical multiwavelet demultiplexer **400.** In some embodiments, optical wavelet multiplexer **100** may share resources and/or elements of optical demultiplexer **400.** For example, in order to recreate the source signals, the base functions of the wavelet transform have to be identical to the base functions of the inverse wavelet transform. Hence, the resonators of optical MWT multiplexer medium **110** and optical MWT demultiplexer medium **410** are of identical design. Thus, optical multiplexer resonators **114** may also be employed to implement optical demultiplexer resonators **414,** yet with respective different inputs and outputs for multiplexed and demultiplexed optical signals. More specifically, an input of for example optical multiplexer resonator **114** may be the output of optical demultiplexer resonator **414.** Thus, depending on the direction of propagation of multiwavelet-processed OFDM encoded optical signals, an optical multiwavelet multiplexer may, at the same time, also function as an optical multiwavelet demultiplexer.

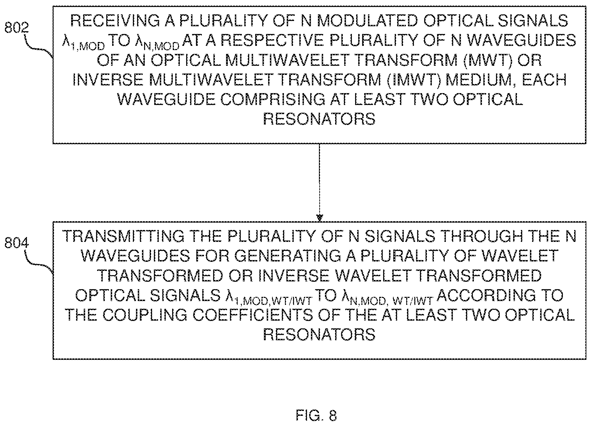

Reference is now made to **FIG. 8.** According to some embodiments, a method for optical multiwavelet OFD Multiplexing and/or Demultiplexing includes, as indicated by procedure **802,** receiving (e.g., at multiplexer input module **104** or demultiplexer output module **408**) a plurality of N modulated optical signals $\lambda_{1,MOD}$ to $\lambda_{n,MOD}$ at a respective plurality of N waveguides (e.g., multiplexer waveguides **112** or demultiplexer waveguides **412**) of an optical multiwavelet transform (MWT) or inverse multiwavelet transform (IMWT) medium, each waveguide comprising at least two optical resonators.

As indicated by box **804,** the method may include transmitting the plurality of N signals through the N waveguides for generating a plurality of wavelet transformed or inverse wavelet transformed optical signals $\lambda_{1,MOD,WT/IWT}$ to $\lambda_{N,MOD,\,WT/IWT}$ according to the coupling coefficients of the at least two optical resonators.

In the claims or specification of the present application, unless otherwise stated, adjectives such as "substantially" and "about" modifying a condition or relationship characteristic of a feature or features of an embodiment of the invention, are understood to mean that the condition or characteristic is defined to within tolerances that are acceptable for operation of the embodiment for an application for which it is intended.

It should be understood that where the claims or specification refer to "a" or "an" element, such reference is not to be construed as there being only one of that element.

In the description and claims of the present application, each of the verbs, "comprise" "include" and "have", and conjugates thereof, are used to indicate that the object or objects of the verb are not necessarily a complete listing of components, elements or parts of the subject or subjects of the verb.

While this disclosure describes a limited number of embodiments, it will be appreciated that many variations, modifications and other applications of such embodiments may be made. The disclosure is to be understood as not limited by the specific embodiments described herein, but only by the scope of the appended claims.

**Claims**

1. An optical multiwavelet transform, MWT, or inverse multiwavelet transform, IMWT, medium (110) for implementing optical wavelet transform, WT, Orthogonal Frequency Division Multiplexing, OFDM, or optical demultiplexing, the optical MWT or IMWT medium (110) is **characterized by**
a plurality of N waveguides (112) for receiving in parallel a corresponding number of N modulated optical input signals $\lambda_{1,MOD}$ to $\lambda_{N,MOD}$, each waveguide (112) comprising at least two optical resonators (114) configured such as to realize a wavelet filterbank that effects a wavelet transformation or inverse wavelet transformation on modulated optical signals to obtain respective optical WT or IWT signals that are respectively orthogonally frequency division multiplexed or demultiplexed.

2. The optical MWT medium (110) of claim 1, wherein an optical resonator (114) of the at least two optical resonators comprises a microring resonator.

3. The optical MWT medium (110) of claim 1, wherein an optical resonator (114) of the at least two optical resonators comprises a Mach-Zehnder interferometer.

4. The optical MWT medium (110) according to any of the preceding claims, wherein an optical resonator (114) of the at least two optical resonators comprises a plurality of microring resonators in cascade arrangement.

5. The optical MWT medium (110) according to any of the preceding claims, wherein the wavelet filterbank is a Geronimo, Hardian and Massopust, GHM, wavelet filterbank.

6. An optical wavelet multiplexer (100) comprising:

a) a multiplexer input module (104) comprising a plurality of N modulators for modulating N optical input signals to obtain a plurality of N modulated optical input signals $\lambda_{1,MOD}$- $\lambda_{N,MOD}$; and
b) an optical multiwavelet transform, MWT, medium (110) for receiving the N modulated optical input signals $\lambda_{1,MOD}$ - $\lambda_{N,MOD}$, the optical MWT medium (110) comprising a plurality of N waveguides (112) for receiving in parallel the N modulated optical input signals $\lambda_{1,MOD}$ to $\lambda_{N,MOD}$, each waveguide (112) comprising at least two optical resonators (114) configured such to realize a wavelet filterbank that effects a wavelet transformation on modulated optical signals to obtain optical WT signals that are orthogonally frequency division multiplexed.

7. The optical wavelet multiplexer (100) of claim 6, wherein the multiplexer input module (104) further comprises a light source (101).

8. The optical wavelet multiplexer (100) of claim 6 or 7, wherein the multiplexer input module (104) comprises a splitter (103) for splitting optical signals emitted by the light source (101).

9. The optical wavelet multiplexer (100) according to any of the claims 6 to 8, further comprising:
a multiplexer feedback module (140) configured to cause adjustment of the physical parameters of the at least two optical multiplexer resonators based on detected signal parameters at the output signal line.

10. An optical wavelet demultiplexer (400), comprising:

a) an optical inverse multiwavelet transform, IMWT, medium (410) comprising a plurality of N waveguides (412) for receiving in parallel corresponding N modulated optical wavelet transformed, WT, input signals $\lambda_{1,MOD, WT}$ to $\lambda_{N,MOD,WT}$ of an optical OFDM signal, each waveguide (412) comprising at least two optical resonators (414) configured such to realize a wavelet filterbank that effects inverse wavelet transformation, IWT, on the modulated optical wavelet transformed signals to obtain optical IWT signals $\lambda_{1,MOD,IWT}$ to $\lambda_{N,MOD,IWT}$ that are demultiplexed;

and

b) a demultiplexer input module (404) for providing the optical IMWT medium (410) with the plurality ofN modulated and WT optical signals $\lambda_{1,MOD,WT}$ to $\lambda_{N,MOD, WT}$ of a multiplexed signal $I_{mux}$.

**11.** The optical wavelet demultiplexer (400) according to claim 10, further comprising:

c) a demultiplexer output module (108) for providing demultiplexed signals $I_{1,demux}$ to $I_{N,demux}$ over output signal lines; and

d) a demultiplexer feedback module (440) that is operatively coupled with one or more of the at least two optical demultiplexer resonators (414) and with the output signal lines and/or with each output of waveguides (412).

**12.** The optical wavelet demultiplexer (400) according to claim 10 or 11, wherein the demultiplexer output module (408) further comprises N optical filters for obtaining optical inverse wavelet transformed signals $X_{c0,1,MOD,IWT}$ to $\lambda_{cQ,N,MOD,IWT}$ respective of their carrier wavelengths c0 to cQ.

**13.** A system comprising an optical wavelet multiplexer (100) according to any of the claims 6 to 9 for multiplexing source signals $I_{1,source}$ to $I_{N,source}$ and an optical wavelet demultiplexer (400) according to any of the claims 10 to 12 and communicably coupled with the optical wavelet multiplexer (400) for recreating the sources signals $I_{1,source}$ to $I_{N,source}$.

**14.** The system according to claim 13, wherein the optical multiplexer resonators are employed to implement optical demultiplexer resonators (414), with respective different inputs and outputs for multiplexed and demultiplexed optical signals.

**15.** A method for optical multiwavelet OFDM or optical multiwavelet demultiplexing of a plurality of optical signals, the method comprising the steps of:

a) receiving a plurality of N modulated optical signals $\lambda_{1,MOD}$ to $\lambda_{n,MOD}$ at a respective plurality of N waveguides (112, 412) of an optical multiwavelet transform, MWT, or inverse multiwavelet transform, IMWT, medium (110, 410), each waveguide (112, 412) comprising at least two optical resonators (114, 414); and

b) transmitting the plurality of N signals through the N waveguides (112, 412) for generating a plurality of wavelet transformed or inverse wavelet transformed optical signals $\lambda_{1,MOD,WT/IWT}$ to $\lambda_{N,MOD, WT/IWT}$ according to the coupling coefficients of the at least two optical resonators (114, 414).

**Patentansprüche**

**1.** Optisches Medium (110) zur Multiwavelet-Transformation, MWT, oder inversen Multiwavelet-Transformation, IMWT, zum Implementieren von orthogonalem Frequenzmultiplexieren, OFDM, mit optischer Wavelet-Transformation, WT, oder optischem Demultiplexieren, wobei das optische MWT- oder IMWT-Medium (110) **gekennzeichnet ist durch**: eine Vielzahl von N Wellenleitern (112) zum parallelen Empfangen einer entsprechenden Anzahl von N modulierten optischen Eingangssignalen $\lambda_{1,MOD}$ bis $\lambda_{N,MOD}$, wobei jeder Wellenleiter (112) mindestens zwei optische Resonatoren (114) umfasst, die dafür konfiguriert sind, eine Wavelet-Filterbank zu verwirklichen, die an modulierten optischen Signalen eine Wavelet-Transformation oder inverse Wavelet-Transformation bewirkt, um jeweilige optische WT- oder IWT-Signale zu erlangen, die jeweils orthogonal frequenzmultiplexiert oder demultiplexiert sind.

**2.** Optisches MWT-Medium (110) nach Anspruch 1, worin ein optischer Resonator (114) der mindestens zwei optischen Resonatoren einen Mikroringresonator umfasst.

**3.** Optisches MWT-Medium (110) nach Anspruch 1, worin ein optischer Resonator (114) der mindestens zwei optischen Resonatoren ein Mach-Zehnder-Interferometer umfasst.

**4.** Optisches MWT-Medium (110) nach einem der vorhergehenden Ansprüche, worin ein optischer Resonator (114) der mindestens zwei optischen Resonatoren eine Vielzahl von Mikroringresonatoren in Kaskadenanordnung umfasst.

**5.** Optisches MWT-Medium (110) nach einem der vorhergehenden Ansprüche, worin die Wavelet-Filterbank eine Wavelet-Filterbank nach Geronimo, Hardian und Massopust, GHM, ist.

6. Optischer Wavelet-Multiplexer (100), umfassend:

a) ein Multiplexer-Eingangsmodul (104), das eine Vielzahl von N Modulatoren zum Modulieren von N optischen Eingangssignalen umfasst, um eine Vielzahl von N modulierten optischen Eingangssignalen $\lambda_{1,MOD}$ bis $\lambda_{N,MOD}$ zu erlangen; und

b) ein optisches Medium (110) zur Multiwavelet-Transformation, MWT, zum Empfangen der N modulierten optischen Eingangssignale $\lambda_{1,MOD}$ bis $\lambda_{N,MOD}$, wobei das optische MWT-Medium (110) eine Vielzahl von N Wellenleitern (112) zum parallelen Empfangen der N modulierten optischen Eingangssignale $\lambda_{1,MOD}$ bis $\lambda_{N,MOD}$ umfasst, wobei jeder Wellenleiter (112) mindestens zwei optische Resonatoren (114) umfasst, die dafür konfiguriert sind, eine Wavelet-Filterbank zu verwirklichen, die an modulierten optischen Signalen eine Wavelet-Transformation bewirkt, um optische WT-Signale zu erlangen, die orthogonal frequenzmultiplexiert sind.

7. Optischer Wavelet-Multiplexer (100) nach Anspruch 6, worin das Multiplexer-Eingangsmodul (104) ferner eine Lichtquelle (101) umfasst.

8. Optischer Wavelet-Multiplexer (100) nach Anspruch 6 oder 7, worin das Multiplexer-Eingangsmodul (104) einen Splitter (103) zum Aufteilen von optischen Signalen, die durch die Lichtquelle (101) emittiert werden, umfasst.

9. Optischer Wavelet-Multiplexer (100) nach einem der Ansprüche 6 bis 8, ferner umfassend:
ein Multiplexer-Rückkopplungsmodul (140), das dafür konfiguriert ist, die Anpassung der physikalischen Parameter der mindestens zwei optischen Multiplexer-Resonatoren auf der Grundlage ermittelter Signalparameter an der Ausgangssignalleitung zu bewirken.

10. Optischer Wavelet-Demultiplexer (400), umfassend:

a) ein optisches Medium (410) zur inversen Multiwavelet-Transformation, IMWT, das eine Vielzahl von N Wellenleitern (412) zum parallelen Empfangen entsprechender N modulierter optisch wavelet-transformierter, WT, Signale $\lambda_{1,MOD,WT}$ bis $\lambda_{N,MOD,WT}$ eines optischen OFDM-Signals umfasst, wobei jeder Wellenleiter (412) mindestens zwei optische Resonatoren (414) umfasst, die dafür konfiguriert sind, eine Wavelet-Filterbank zu verwirklichen, die an den modulierten optisch wavelet-transformierten Signalen eine inverse Wavelet-Transformation, IWT, bewirkt, um optische IWT-Signale $\lambda_{1,MOD,IWT}$ bis $\lambda_{N,MOD,IWT}$ zu erlangen, die demultiplexiert sind; und

b) ein Demultiplexer-Eingangsmodul (404) zum Versorgen des optischen IMWT-Mediums (410) mit der Vielzahl von N modulierten und optischen WT-Signalen $\lambda_{1,MOD,WT}$ bis $\lambda_{N,MOD,WT}$ eines multiplexierten Signals $I_{mux}$.

11. Optischer Wavelet-Demultiplexer (400) nach Anspruch 10, ferner umfassend:

c) ein Demultiplexer-Ausgangsmodul (108) zum Bereitstellen von demultiplexierten Signalen $I_{1,demux}$ bis $I_{N,demux}$ über Ausgangssignalleitungen; und

d) ein Demultiplexer-Rückkopplungsmodul (440), das betrieblich mit einem oder mehreren der mindestens zwei optischen Demultiplexer-Resonatoren (414) und mit den Ausgangssignalleitungen und/oder mit jedem Ausgang der Wellenleiter (412) gekoppelt ist.

12. Optischer Wavelet-Demultiplexer (400) nach Anspruch 10 oder 11, worin das Demultiplexer-Ausgangsmodul (408) ferner N optische Filter zum Erlangen von optischen invers wavelet-transformierten Signalen $\lambda_{c0,1,MOD,IWT}$ bis $\lambda_{cQ,N,MOD,IWT}$ bezüglich ihrer Trägerwellenlängen c0 bis cQ umfasst.

13. System, umfassend einen optischen Wavelet-Multiplexer (100) nach einem der Ansprüche 6 bis 9 zum Multiplexieren von Quellsignalen $I_{1,source}$ bis $I_{N,source}$ und einen optischen Wavelet-Multiplexer (400) nach einem der Ansprüche 10 bis 12 und zum Wiederherstellen der Quellsignale $I_{1,source}$ bis $I_{N,source}$ kommunikativ mit dem optischen Wavelet-Multiplexer (400) gekoppelt.

14. System nach Anspruch 13, worin die optischen Multiplexer-Resonatoren genutzt werden, um optische Demultiplexer-Resonatoren (414) mit jeweils unterschiedlichen Ein- und Ausgängen für multiplexierte und demultiplexierte optische Signale zu implementieren.

15. Verfahren zum optischen Multiwavelet-OFDM oder optischen Multiwavelet-Demultiplexieren einer Vielzahl von optischen Signalen, wobei das Verfahren die Schritte umfasst:

a) Empfangen einer Vielzahl von N modulierten optischen Signalen $\lambda_{1,MOD}$ bis $\lambda_{N,MOD}$ an einer entsprechenden Vielzahl von N Wellenleitern (112, 412) eines optischen Mediums (110, 410) zur Multiwavelet-Transformation, MWT, oder inversen Multiwavelet-Transformation, IMWT, wobei jeder Wellenleiter (112, 412) mindestens zwei optische Resonatoren (114, 414) umfasst; und

b) Übertragen der Vielzahl von N Signalen durch die N Wellenleiter (112, 412) zum Erzeugen einer Vielzahl von wavelet-transformierten oder invers wavelet-transformierten optischen Signalen $\lambda_{1,MOD,WT/IWT}$ bis $\lambda_{N,MOD,WT/IWT}$ gemäß den Kopplungskoeffizienten der mindestens zwei optischen Resonatoren (114, 414).

## Revendications

1. Milieu optique de transformation en ondelettes multiples, MWT, ou de transformation inverse en ondelettes multiples, IMWT, (110) pour mettre en oeuvre un multiplexage optique par répartition en fréquences orthogonales, OFDM, par transformation en ondelettes, WT, ou un démultiplexage optique afférent, le milieu optique MWT ou IMWT (110) étant **caractérisé par**
une pluralité de N guides d'ondes (112) pour recevoir en parallèle un nombre correspondant de N signaux optiques d'entrée modulés $\lambda_{1,\,MOD}$ à $\lambda_{N,\,MOD}$, chaque guide d'ondes (112) comprenant au moins deux résonateurs optiques (114) qui sont configurés de manière à ce qu'ils réalisent une batterie de filtres d'ondelettes qui effectue une transformation en ondelettes ou une transformation inverse en ondelettes sur des signaux optiques modulés de manière à obtenir des signaux optiques WT ou IWT respectifs qui sont respectivement multiplexés ou démultiplexés par répartition en fréquences orthogonales.

2. Milieu optique MWT (110) selon la revendication 1, dans lequel un résonateur optique (114) des au moins deux résonateurs optiques comprend un résonateur à micro-anneau.

3. Milieu optique MWT (110) selon la revendication 1, dans lequel un résonateur optique (114) des au moins deux résonateurs optiques comprend un interféromètre de Mach-Zehnder.

4. Milieu optique MWT (110) selon l'une quelconque des revendications qui précèdent, dans lequel un résonateur optique (114) des au moins deux résonateurs optiques comprend une pluralité de résonateurs à micro-anneau selon un agencement en cascade.

5. Milieu optique MWT (110) selon l'une quelconque des revendications qui précèdent, dans lequel la batterie de filtres d'ondelettes est une batterie de filtres d'ondelettes de Geronimo, Hardian et Massopust, GHM.

6. Multiplexeur optique d'ondelettes (100) comprenant :

a) un module d'entrée de multiplexeur (104) qui comprend une pluralité de N modulateurs pour moduler N signaux optiques d'entrée de manière à obtenir une pluralité de N signaux optiques d'entrée modulés $\lambda_{1,\,MOD}$ à $\lambda_{N,\,MOD}$ ; et

b) un milieu optique de transformation en ondelettes multiples, MWT, (110) pour recevoir les N signaux optiques d'entrée modulés $\lambda_{1,\,MOD}$ à $\lambda_{N,\,MOD}$, le milieu optique MWT (110) comprenant une pluralité de N guides d'ondes (112) pour recevoir en parallèle les N signaux optiques d'entrée modulés $\lambda_{1,\,MOD}$ à $\lambda_{N,\,MOD}$, chaque guide d'ondes (112) comprenant au moins deux résonateurs optiques (114) qui sont configurés de manière à ce qu'ils réalisent une batterie de filtres d'ondelettes qui effectue une transformation en ondelettes sur des signaux optiques modulés de manière à obtenir des signaux optiques WT qui sont multiplexés par répartition en fréquences orthogonales.

7. Multiplexeur optique d'ondelettes (100) selon la revendication 6, dans lequel le module d'entrée de multiplexeur (104) comprend en outre une source de lumière (101).

8. Multiplexeur optique d'ondelettes (100) selon la revendication 6 ou 7, dans lequel le module d'entrée de multiplexeur (104) comprend un séparateur (103) pour séparer les signaux optiques qui sont émis par la source de lumière (101).

9. Multiplexeur optique d'ondelettes (100) selon l'une quelconque des revendications 6 à 8, comprenant en outre :
un module de retour de multiplexeur (140) qui est configuré de manière à ce qu'il génère un réglage des paramètres physiques des au moins deux résonateurs de multiplexeur optique sur la base de paramètres de signal détectés au niveau de la ligne de signal de sortie.

**10.** Démultiplexeur optique d'ondelettes (400), comprenant :

   a) un milieu optique de transformation inverse en ondelettes multiples, IMWT, (410) qui comprend une pluralité de N guides d'ondes (412) pour recevoir en parallèle N signaux optiques d'entrée transformés en ondelettes, WT, modulés $\lambda_{1, MOD,WT}$ à $\lambda_{N, MOD,WT}$ d'un signal OFDM optique, chaque guide d'ondes (412) comprenant au moins deux résonateurs optiques (414) qui sont configurés de manière à ce qu'ils réalisent une batterie de filtres d'ondelettes qui effectue une transformation inverse en ondelettes, IWT, sur les signaux optiques transformés en ondelettes modulés de manière à obtenir des signaux optiques IWT $\lambda_{1, MOD,IWT}$ à $\lambda_{N, MOD,IWT}$ qui sont démultiplexés ; et
   b) un module d'entrée de démultiplexeur (404) pour munir le milieu optique IMWT (410) de la pluralité de N signaux optiques modulés et WT $\lambda_{1, MOD,WT}$ à $\lambda_{N, MOD,WT}$ d'un signal multiplexé $I_{mux}$.

**11.** Démultiplexeur optique d'ondelettes (400) selon la revendication 10, comprenant en outre :

   c) un module de sortie de démultiplexeur (108) pour fournir des signaux démultiplexés $I_{1, démux}$ à $I_{N, démux}$ sur des lignes de signal de sortie ; et
   d) un module de retour de démultiplexeur (440) qui est couplé de manière fonctionnelle à un ou à plusieurs des au moins deux résonateurs de démultiplexeur optique (414) et aux lignes de signal de sortie et/ou à chaque sortie de guides d'ondes (412).

**12.** Démultiplexeur optique d'ondelettes (400) selon la revendication 10 ou 11, dans lequel le module de sortie de démultiplexeur (408) comprend en outre N filtres optiques pour obtenir des signaux optiques soumis à transformation inverse en ondelettes $\lambda_{c0,1, MOD,IWT}$ à $\lambda_{cQ,N,MOD,IWT}$ respectifs de leurs longueurs d'onde de porteuse c0 à cQ.

**13.** Système comprenant un multiplexeur optique d'ondelettes (100) selon l'une quelconque des revendications 6 à 9 pour multiplexer des signaux de source $I_{1,source}$ à $I_{N,source}$ et un démultiplexeur optique d'ondelettes (400) selon l'une quelconque des revendications 10 à 12 et couplé en termes de communication avec le multiplexeur optique d'ondelettes (400) pour recréer les signaux de source $I_{1,source}$ à $I_{N,source}$.

**14.** Système selon la revendication 13, dans lequel les résonateurs de multiplexeur optique sont utilisés pour mettre en oeuvre des résonateurs de démultiplexeur optique (414), avec des entrées et des sorties différentes respectives pour des signaux optiques multiplexés et démultiplexés.

**15.** Procédé pour le démultiplexage optique OFDM à ondelettes multiples ou optique à ondelettes multiples d'une pluralité de signaux optiques, le procédé comprenant les étapes constituées par :

   a) la réception d'une pluralité de N signaux optiques modulés $\lambda_{1, MOD}$ à $\lambda_{N, MOD}$, au niveau d'une pluralité respective de N guides d'ondes (112, 412) d'un milieu optique de transformation en ondelettes multiples, MWT, ou de transformation inverse en ondelettes multiples, IMWT, (110, 410), chaque guide d'ondes (112, 412) comprenant au moins deux résonateurs optiques (114, 414) ; et
   b) la transmission de la pluralité de N signaux au travers des N guides d'ondes (112, 412) pour générer une pluralité de signaux optiques soumis à transformation en ondelettes ou à transformation inverse en ondelettes $\lambda_{1, MOD,WT/IWT}$ à $\lambda_{N,MOD,WT/IWT}$ conformément aux coefficients de couplage des aux moins deux résonateurs optiques (114, 414).

FIG. 1

EP 3 250 952 B1

FIG. 2

100

101

LIGHT
SOURCE

104

102i

MODULATOR

$\lambda_{c0}$

$\lambda_{c0,1,Mod}$

MODULATOR

$\lambda_{c1}$

$\lambda_{c1,2,Mod}$

MODULATOR

$\lambda_{c2}$

$\lambda_{c2,3,Mod}$

102n

MODULATOR

$\lambda_{cQ}$

$\lambda_{cQ,N,Mod}$

$m_i$

$m_n$

110

OPTICAL MULTIPLEXER

112

114

108

$\lambda_{c0,1,WT,Mod}$

$\lambda_{c1,2,WT2,Mod}$

$\lambda_{c2,3,\ WT3,\ Mod}$

$\lambda_{cQ,N,WT,Mod}$

MULTIPLEXER OUTPUT MODULE

120

$\lambda_{c0-cQ,Mux}$ /
$I_{c0-cQ,\ Mux}$

FIG. 3

FIG. 4

FIG. 5

FIG. 6

FIG. 7

802 — RECEIVING A PLURALITY OF N MODULATED OPTICAL SIGNALS $\lambda_{1,MOD}$ TO $\lambda_{N,MOD}$ AT A RESPECTIVE PLURALITY OF N WAVEGUIDES OF AN OPTICAL MULTIWAVELET TRANSFORM (MWT) OR INVERSE MULTIWAVELET TRANSFORM (IMWT) MEDIUM, EACH WAVEGUIDE COMPRISING AT LEAST TWO OPTICAL RESONATORS

804 — TRANSMITTING THE PLURALITY OF N SIGNALS THROUGH THE N WAVEGUIDES FOR GENERATING A PLURALITY OF WAVELET TRANSFORMED OR INVERSE WAVELET TRANSFORMED OPTICAL SIGNALS $\lambda_{1,MOD,WT/IWT}$ TO $\lambda_{N,MOD,\ WT/IWT}$ ACCORDING TO THE COUPLING COEFFICIENTS OF THE AT LEAST TWO OPTICAL RESONATORS

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CINCOTTI et al.** Optical wavelet signals processing and multiplexing. *EURASIP Journal on Applied Signal Processing,* 01 January 2005, vol. 2005, 1574-1583
- **BEN EZRA et al.** 1 TBPS transmission system based on hierarchical approach to Wavelet Packet Transform OFDM. *TRANSPARENT OPTICAL NETWORKS (ICTON), 2011 13TH, INTERNATIONAL CONFERENCE ON, IEEE,* 26 June 2011, ISBN 978-1 -4577-0881, 1-4

- **BULAKCI O et al.** Wavelet transform based optical OFDM. *OPTICAL FIBER COMMUNICATION - INCUDES [sic!] POST DEADLINE PAPERS, 2009. OFC 2009. CONFERENCE ON, IEEE,* 22 March 2009, ISBN 978-1-4244-2606-5, 1-3